# EUROPEAN PATENT SPECIFICATION

(11) **EP 3 434 929 B1**
(45) Date of publication and mention of the grant of the patent: **22.07.2020**
(21) Application number: 18163055.9
(22) Date of filing: 21.03.2018
(51) Int. Cl.: F16F 9/36, E05F 5/02, E05F 5/10

(54) **DOUBLE-SEALED GASKET FOR HYDRAULIC SHOCK ABSORBER FOR USE IN SELF-CLOSERS IN FURNITURE**
DOPPELT ABGEDICHTETE DICHTUNG FÜR HYDRAULISCHE STOSSDÄMPFER ZUM EINSATZ IN SELBSTSCHLIESSERN IN MÖBELN
JOINT DOUBLE SCELLÉ POUR AMORTISSEUR HYDRAULIQUE DESTINÉ À ÊTRE UTILISÉ DANS DES DISPOSITIFS DE FERMETURE AUTOMATIQUES DE MOBILIER

(30) Priority: 24.07.2017 ES 201730960
(43) Date of publication of application: 30.01.2019
(73) Proprietor: Industrias Auxiliares, S.A., 20808 Getaria (ES)
(72) Inventor: RIOJA IRIBARREN, Luis Maria, 20808 GETARIA (GUIPUZCOA) (ES)
(74) Representative: Izquierdo Blanco, Maria Alicia

(56) References cited:
- EP-A1- 2 630 388
- WO-A1-2012/114943
- CN-U- 201 705 853
- JP-A- S5 740 137
- JP-A- 2009 168 159
- JP-A- 2011 214 710

## Description

### SUBJECT-MATTER OF THE INVENTION

In self-closers for furniture, shock absorbers are used, and this invention concerns a double-sealed gasket for hydraulic shock absorbers of the type used in shock absorbers for double sealing of the passage of liquid, on one side or end, the external body seal, and, on the other side or end, the shaft seal, and these shock absorbers further include shaft volume compensators due to the volume occupied by the shaft inside the shock absorber body.

It is important to take into account that, due to the small dimensions of these shock absorbers, it is critical to use more complex configurations.

### PRIOR ART

Currently, and as a reference to the prior art, it is common and known to use double-sealing gaskets in shock absorbers. These gaskets prevent liquid exiting the internal chamber of the cylinder of the shock absorber both on the end of the body and on that of the shaft, and incorporate various systems to compensate the volume of liquid displaced due to the volume of the shaft introduced into the shock absorber body, which influences the capacity of the chambers.

A common solution used by hydraulic shock absorber manufacturers to address the issue of compensating the volume due to the displacement of the liquid inside the shock absorber consists of including a compensating sponge or cushion on the end from which the shat emerges, such that, during the insertion of the shaft into the body of the shock absorber, the fluid exerts pressure on the cushion, compressing it and thus reducing its volume. This volume that is subtracted from the compensating cushion is occupied by the fluid that displaces the volume of the shaft submerged therein during its insertion into the cylinder of the shock absorber. However, this type of solution gives rise to various problems given that the shock absorber is actuated a certain number of times. On the one hand, these compensating sponges or cushions act as air bags that compensate for the volume of the shaft by compressing the air they contain. This air is distributed over a large number of closed internal cells that form the structure of the sponge. The continuous compression-expansion cycles cause these cells to open and allow the air to escape, thus creating air bubbles that may cause deterioration in the operation of the shock absorber and undesired noise during operation. On the other hand, when the sponge is at maximum compression, an internal pressure is generated in the shock absorber that again tries to displace the axis of the shock absorber towards the outside, thus generating undesired effort due to this residual pressure contained in the sponge. Additionally, when the acceleration is high during the extraction of the shaft, the oil flows inside the shock absorber cause the sponge to move towards the area of the piston, which causes the extraction of the piston to be stopped.

There is another type of solution for the compensation of the volume of the shaft submerged in the fluid contained in the shock absorber, based on gaskets that are longitudinally movable by means of a spring and allow the chamber holding the fluid to be increased or decreased in size, thus compensating for the variation in volume caused by the shaft. These solutions involve a seal of the external body that is not static, as is customary, but rather mobile. This means that the watertightness of the seal is of greater importance due to the resultant wear. Furthermore, the spring has the undesired effect of generating residual pressure, which, as with sponges, displaces the shaft towards the outside. CN 201 705 853 U and EP 2 630 388 A1 disclose a double-sealed compensating gasket according to the preamble of Claim 1.

### EXPLANATION OF THE INVENTION AND ITS BENEFITS

Against this background, this invention concerns a double-sealed compensating gasket for hydraulic shock absorbers that can be used in self-closers for furniture, wherein, in the double-sealed compensating gasket between the external body seal end and the shaft seal end, there is substantial axial longitudinal separation or spacing, thus forming an elastic spaced area that is coaxial and positioned on the shaft of the shock absorber, and, one side, is an annular fluid compensation chamber, and, on the other, an air chamber.

Due to this configuration, the volume of the shaft submerged in the fluid (generally oil) is compensated during the insertion of the shaft into the body of the shock absorber, thus also reducing the number of elements necessary in order to carry out this task. The displaced fluid volume is container in the annular fluid compensation chamber and the inside of the cylindrical shock absorber body, thus substantially reducing the volume of the annular fluid compensation chamber that forms part of the double-sealed compensating gasket located coaxial to the shaft of the shock absorber. This solution compensates for the volume of the submerged shaft without the appearance of undesirable bubbles that is caused by the rupture of the closed cells of which sponges consist.

Another characteristic of the invention is that the closing cap includes at least one air passage between the inside of the air chamber and the outside, thus allowing for the compensatory passage of air and avoiding counterforces.

This configuration of the invention provides for compensation of the volume of the shaft submerged in the fluid inside the shock absorber, resulting in nil residual counterforce because the generation of pressure from air compression inside the annular fluid compensation chamber is avoided when the shaft of the shock absorber is inserted.

Another characteristic of the invention is the existence of a separator that maintains the axial longitudinal space between the seal end of the internal body and the seal end of the shaft.

This configuration avoids the possibility of displacement of the seal end of the shaft during the movement of the shaft of the shock absorber, ensuring an arrangement that is more conducive to maintaining the seal.

Another characteristic of the invention is that the separator is provided as an annular extension of the closing cap that embraces or covers the shaft of the shock absorber and is capped by a cap that fits into the seal end of the shaft.

This configuration allows for a better seal and prevents the generation of undesired friction by the inner surface of the air chamber that would make it difficult to reach all of the desired positions of the shaft of the shock absorber.

Another characteristic of the invention is that it is provided that the separator has positioning threads arranged symmetrically in the radial direction and on the internal surface of the air chamber.

Due to this arrangement, these positioning threads ensure that the annular fluid compensation chamber of the double-sealed compensating gasket experiences controlled deformation that is as gentle and distributed as possible without critical flexion zones that result in breakage due to fatigue and thus cause oil leaks.

Another characteristic of the invention is that it is provided that the external annular surface of the air chamber includes shallow longitudinal evacuation grooves.

This configuration facilitates the assembly of the shock absorber, evacuating the air volume that will be occupied by the double-sealed compensating gasket inside the cylindrical body of the shock absorber. This air will exit to the outside via the longitudinal evacuation grooves, thus avoiding the formation of air pockets. The shock absorbers used in furniture are characterised by their small dimensions; as such, the assembly of their components must be made as easy and simple as possible.

### DRAWINGS AND REFERENCES

In order to better understand the nature of the invention, the attached drawings show an industrial embodiment, which is provided by way of example only.
Fig. 1a shows an elevated section of the shock absorber (4) with the shaft (5) of the shock absorber fully extended, and an enlarged detail view of the double-sealed compensating gasket (10), in which the air chamber (11b) containing the maximum volume of air is shown.
Fig. 1b shows the profile in the section A-A indicated in fig. 1a, in which the configuration of the double-sealed compensating gasket (10) can be seen with the maximum volume of air in the air chamber (11b).
Fig. 2a shows an elevated section of the shock absorber (4) with the shaft (5) of the shock absorber fully inserted into the cylindrical body (6) of the shock absorber, and an enlarged detail view of the double-sealed compensating gasket (10) showing the air chamber (11b) containing the minimum volume of air due to the displaced fluid volume.
Fig. 2b shows the profile in the section B-B indicated in fig. 2a, in which the configuration of the double-sealed compensating gasket (10) can be seen with the minimum volume of air in the air chamber (11b).
Fig. 3 shows a perspective view of the double-sealed compensating gasket (10).
Fig. 3a shows a profile view of the double-sealed compensating gasket (10).
Fig. 3b is an elevation view of section A-A indicated in fig. 3a of the double-sealed compensating gasket (10).
Fig. 4 is a perspective view of the closing cap (3) according to the invention.
Fig. 4a shows an elevated view of the closing cap (3).
Fig. 4b shows a profile view of the section C-C indicated in fig. 4a of the closing cap (3).
Fig. 4c is a top view of the section B-B indicated in fig. 4a of the closing cap (3), indicating the air passage (3a), the separator (12), the annular extension (14), and the top (15) of the closing cap (3).

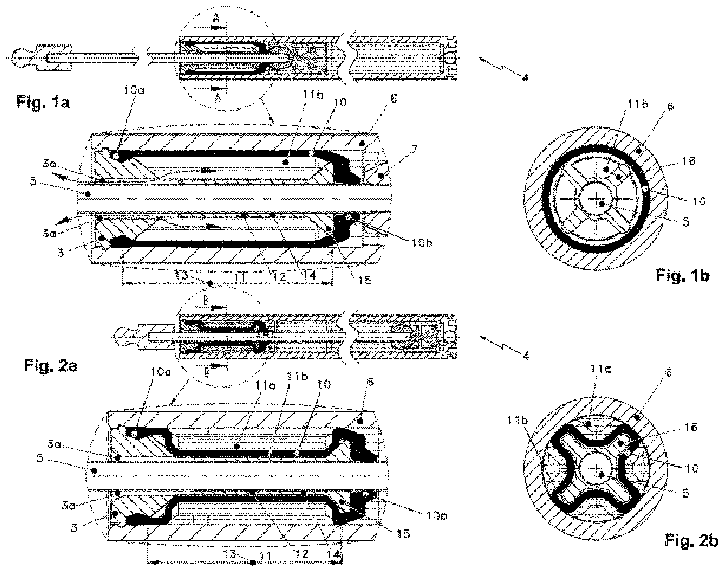

The positional and dimensional correlation of fig. 1, 2, 3, and 4 are provided for ease of understanding of the assembly as a whole.

The drawings in series 5 refer to designs of the shock absorber (4) from the prior art.

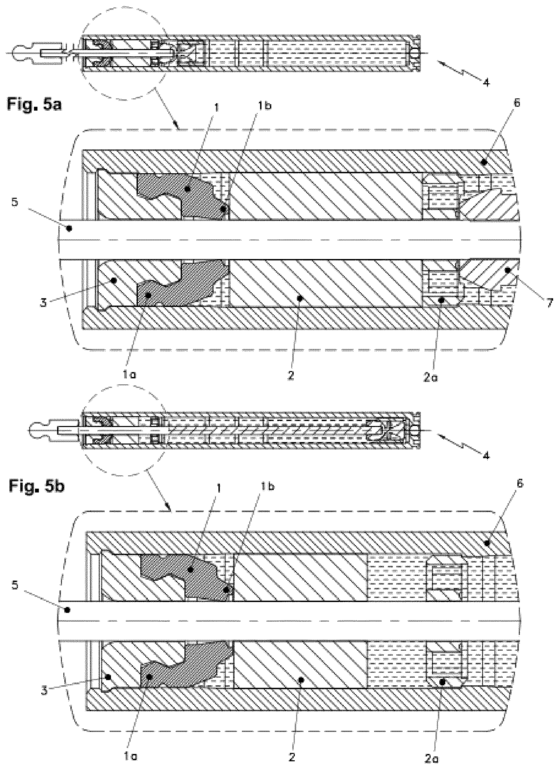

Thus, fig. 5a shows an elevated cross-sectional view of a prior-art shock absorber (4) of the type using compensating cushions (2), with the shaft (5) of the shock absorber fully extended, and an enlarged detail view of the area in which the traditional double seal (1), the compensating cushion (2), and the retaining washer (2a) are located.

Thus, fig. 5b shows an elevated cross-sectional view of a prior-art shock absorber (4) of the type using compensating cushions (2), with the shaft (5) of the shock absorber fully inserted into the cylindrical body of the shock absorber (6), and an enlarged detail view of the area in which the traditional double seal (1), the compensating cushion (2), and the retaining washer (2a) are located. The compression of the compensating cushion (2) can be seen.

The drawings of series 6 show other possible embodiments of the annular fluid compensation chamber (11a) according to the invention.

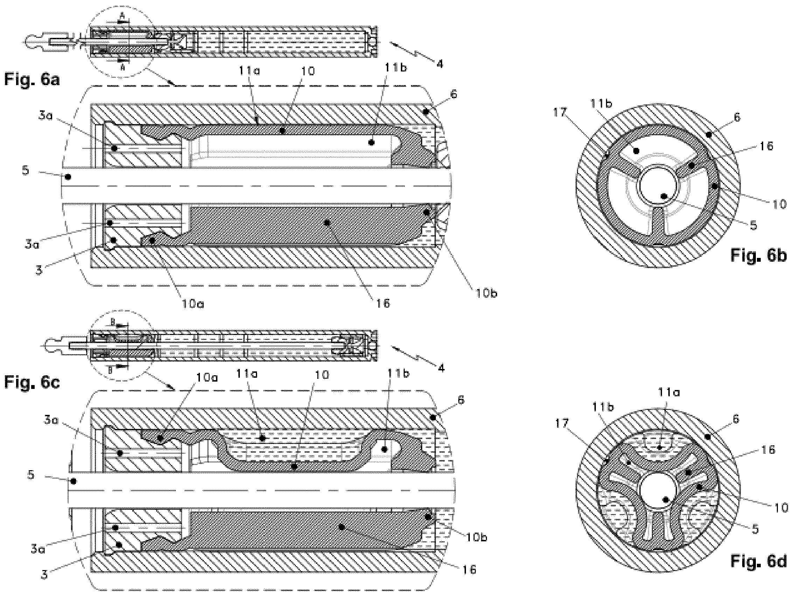

Fig. 6a shows an elevated section of the shock absorber (4) with the shaft (5) of the shock absorber fully extended, and an enlarged detail view of the double-sealed compensating gasket (10), which has positioning threads (16), in which the air chamber (11b) containing the maximum volume of air is shown.

Fig. 6b shows the profile in the section A-A indicated in fig. 6a, in which the configuration of the double-sealed compensating gasket (10), to be provided with positioning threads (16), can be seen with the maximum volume of air in the air chamber (11b).

Fig. 6c shows an elevated section of the shock absorber (4) with the shaft (5) of the shock absorber fully inserted into the cylindrical body (6) of the shock absorber in the embodiment having positioning threads (16), and an enlarged detail view of the double-sealed compensating gasket (10) showing the air chamber (11b) containing the minimum volume of air due to the displaced fluid volume.

Fig. 6d shows the profile in the section B-B indicated in fig. 6c, in which the configuration of the double-sealed compensating gasket (10), to be provided with positioning threads (16), can be seen with the minimum volume of air in the air chamber (11b).

These figures use the following references:
1. Double-sealed gasket:
   1a - seal end of the internal body of the double-sealed gasket (1)
   1b - seal end of the shaft of the double-sealed gasket (1)
2. Compensating cushion:
   2a - retaining washer of the compensating cushion (2)
3. Closing cap
   3a. Air passage in the closing cap (3)
4. Shock absorber
5. Shock absorber shaft
6. Cylindrical body of shock absorber
7. Valve
10. Double-sealed compensating gasket:
   10a - seal end of the internal body of the double-sealed compensating gasket (10)
   10b - seal end of the shaft of the double-sealed compensating gasket (10)
11. Spaced elastic zone
   11a. Annular fluid compensation chamber
   11b. air chamber
12. Separator
13. Axial longitudinal spacing
14. Annular extension of the closing cap (3)
15. Top of the closing cap (3)
16. Positioning threads
17. Longitudinal evacuation grooves

### DESCRIPTION OF A PREFERRED EMBODIMENT

In relation to the drawings and references described above, the appended drawings show a preferred embodiment of the invention, relating to a double-sealed compensating gasket for hydraulic shock absorbers that can be used in self-closers for furniture, wherein, in the double-sealed compensating gasket (10) between the external body seal end (10a) and the shaft seal end (10b), there is substantial axial longitudinal separation or spacing (13), thus forming an elastic spaced area (11) that is coaxial and positioned on the shaft (5) of the shock absorber, and, one side, is an annular fluid compensation chamber (11a), and, on the other, an air chamber (11b).

Fig. 1a shows an elevated cross-sectional view of the shock absorber (4), showing an enlarged detail view of the double-sealed compensating gasket (10). The position of the shaft (5) of the gasket in fig. 1a is the fully extended position relative to the cylindrical body (6) of the shock absorber, and, as shown in the enlarged detail view, the air chamber (11b) included in the double-sealed compensating gasket (10) is in the configuration in which it contains the maximum volume of air. Fig. 1b, a profile in the section A-A indicated in fig. 1a, in shows the configuration of the double-sealed compensating gasket (10) with the maximum volume of air in the air chamber (11b).

As the shaft (5) is introduced into the cylindrical body (6) of the shock absorber during the stroke of the shock absorber (4), the fluid contained within it is displaced and is located between the inner surface of the cylindrical body (6) of the shock absorber and the annular fluid compensation chamber (11a). Thus, when the shaft (5) of the shock absorber reaches the end position and is totally submerged in the fluid, the configuration of the air chamber (11b) is that shown in fig. 2a, containing the minimum volume of air and the maximum amount of fluid in the annular fluid compensation chamber (11a). The air contained inside the air chamber (11b) is evacuated via the air passages (3a) to the outside that are provided in the closing cap (3); thus, despite the reduction in the volume of the air chamber (11b), the pressure does not increase, thus avoiding counterforces acting against the insertion of the shaft (5) of the shock absorber into the cylindrical body (6) of the shock absorber.

Fig. 1a and 2a also show the separator (12), which maintains the axial longitudinal spacing (13) between the seal end (10a) of the internal body and the seal end (10b) of the shaft, thus avoiding any displacement of the seal end (10b) of the shaft during the movement of the shaft (5) of the shock absorber and ensuring a proper seal during the movement of the shaft (5).

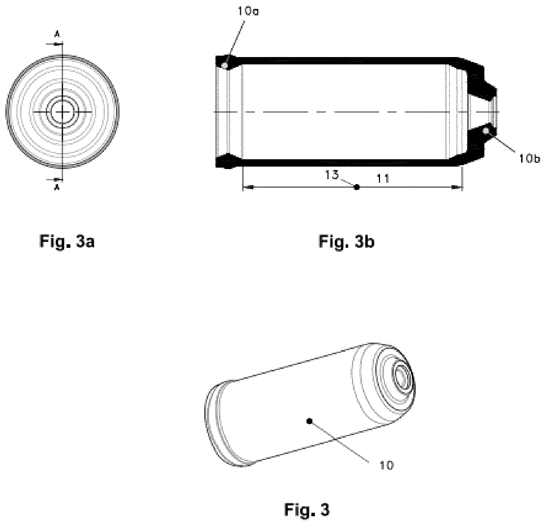

Fig. 3 shows a perspective view of the double-sealed compensating gasket (10). Fig. 3 shows a profile view of the double-sealed compensating gasket (10). Fig. 3b shows the section A-A shown in fig. 3a, showing the seal end (10a) of the internal body and the seal end (10b) of the shaft of the double-sealed compensating gasket (10), as well as the axial longitudinal spacing (13) and the elastic spaced zone (11).

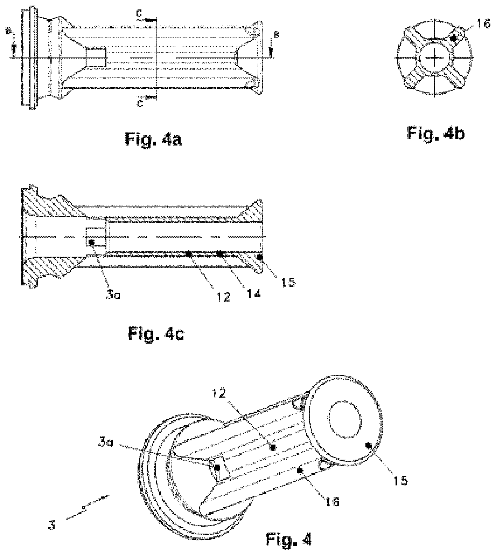

Fig. 4 shows a perspective view of the closing cap (3) consisting of the air passage (3a), which prevents counterforces, the separator (12), the positioning threads (16), and the top (15) of the closing cap (3). Fig. 4 shows an elevated view of the closing cap (3). Fig. 4b shows the profile of the section C-C of fig. 4a, showing the positioning threads (16). Fig. 4c is a top view of the section B-B of fig. 4a.

Fig. 5a and 5b show a prior-art embodiment in which the configuration of the traditional double-sealed gasket (1) does not include an annular fluid compensation chamber (11a). Instead, a compensating cushion (2) is used together with a retaining washer (2a), which prevents the displacement of the compensating cushion (2) by the cylindrical body (6) of the shock absorber during operation. Fig. 5a shows the compensating cushion (2) in its uncompressed state because the shaft (5) of the shock absorber is fully extended. In fig. 5b, the configuration of the compensating cushion (2) is that of maximum compression due to the pressure exerted on it by the fluid. Compared to the double-sealed compensating gasket (10) according to the invention, shown in fig. 1a and 2a, there is a decrease in the elements necessary to carry out compensation, and the counterforce produced by the compensating cushion (2) in its fully compressed state is avoided.

Fig. 6a, 6b, 6c, and 6d show an embodiment of the double-sealed compensating gasket (10) with positioning threads (16), which ensure the proper operation of the double-sealed compensating gasket (10), avoiding any displacement of the seal end (10b) when the shaft (5) of the shock absorber is submerged in the fluid contained in the shock absorber cylinder and further ensuring controlled deformation of the annular fluid compensation chamber (11a) without any areas of extreme flexion that would cause deterioration in the elastic walls of the annular fluid compensation chamber (11a).

Variations in materials, shape, size, and arrangement of the components, which are described without limitation, do not affect the essential characteristics of this invention; the description set forth herein is sufficient to allow its reproduction by a person skilled in the art.

## Claims

1. Double-sealed compensating gasket in a hydraulic shock absorber for use in self-closers in furniture, the shock absorber comprising, a cylindrical body (6) with a shaft (5) in its interior, the double-sealed compensating gasket being of the type in which one end seals the internal cylindrical body of the shock absorber and the other end seals the shaft (5) of the shock absorber, wherein in the double-sealed compensating gasket (10), there is substantial axial longitudinal separation or spacing (13) between the seal end (10a) of the internal cylindrical body of the shock absorber and the seal end (10b) of the shaft (5), thus forming an elastic spaced zone (11) coaxial to and on the shaft (5) of the shock absorber, constituting on the one side an annular fluid compensation chamber (11a), and, on the other, an air chamber (11b) and wherein a closing cap (3) includes at least one air passage (3a) between the inside of the air chamber (11b) and the outside, which permits compensatory passage of air, thus avoiding counterforces and wherein there is a separator (12) that maintains the axial longitudinal spacing (13) between the seal end (10a) of the internal body (10a) and the seal end (10b) of the shaft and **characterised in that** the separator (12) has positioning threads (16) arranged symmetrically in the radial direction and on the inner surface of the air chamber (11b).

2. Double-sealed compensating gasket according to claim 1, **characterised in that** the separator (12) is in the form of an annular extension (14) of the closing cap (3), which embraces or covers the shaft (5) of the shock absorber and has a top (15) that fits in the seal end (10b) of the shaft.

3. Double-sealed compensating gasket according to the foregoing claims, **characterised in that** the external annular surface of the air chamber (11b) includes shallow longitudinal evacuation grooves (17).

## Patentansprüche

1. Doppelt abgedichtete Ausgleichsdichtung in einem hydraulischen Stoßdämpfer zur Verwendung in Selbstschließern in Möbeln, wobei der Stoßdämpfer einen zylindrischen Körper (6) mit einem Schaft (5) im Inneren umfasst, wobei die doppelt abgedichtete Ausgleichsdichtung von der Art ist, bei der ein Ende den inneren zylindrischen Körper des Stoßdämpfers und ein anderes Ende den Schaft (5) des Stoßdämpfers abdichtet, wobei es in der doppelt abgedichteten Ausgleichsdichtung (10) eine erhebliche axiale längsgerichtete Trennung oder Abstand (13) zwischen dem Dichtungsende (10a) des inneren zylindrischen Körpers des Stoßdämpfers und dem Dichtungsende (10b) des Schafts (5) gibt und somit eine elastische beabstandete Zone (11) gebildet wird, die koaxial zu und auf dem Schaft (5) des Stoßdämpfers liegt und auf der einen Seite eine Luftkammer (11b) bildet und wobei eine Verschlusskappe (3) mindestens einen Luftkanal (3a) zwischen der Innenseite der Luftkammer (11b) und der Außenseite umfasst, der einen ausgleichenden Luftdurchgang erlaubt, wodurch Gegenkräfte vermieden werden und wobei ein Abscheider (12) vorhanden ist, der den axialen längsgerichteten Abstand (13) zwischen dem Dichtungsende (10a) des inneren Körpers und dem Dichtungsende des Schafts (10b) aufrechterhält und **dadurch gekennzeichnet ist, dass** der Abscheider (12) Positioniergewinde (16) aufweist, die symmetrisch in radialer Richtung und auf der Innenfläche der Luftkammer (11b) angeordnet sind.

2. Doppelt abgedichtete Ausgleichsdichtung gemäß Anspruch 1, **dadurch gekennzeichnet, dass** der Abscheider (12) in Form einer ringförmigen Verlängerung (14) der Verschlusskappe (3) die Abdeckung des Schafts (5) des Stoßdämpfers umfasst oder bedeckt und eine Oberseite (15) aufweist, die in das Dichtungsende (10b) des Schafts passt.

3. Doppelt abgedichtete Ausgleichsdichtung gemäß einem der vorangehenden Ansprüche, **dadurch gekennzeichnet, dass** die äußere ringförmige Oberfläche der Luftkammer (11b) flache längsgerichtete Entleerungsrillen (17) umfasst.

## Revendications

1. Joint compensateur à double étanchéité dans un amortisseur hydraulique destiné à être utilisé dans des fermetures automatiques de meubles, l'amortisseur comprenant un corps cylindrique (6) avec un arbre (5) en son intérieur, le joint compensateur à double étanchéité étant du type dans lequel une extrémité obture de manière étanche le corps cylindrique interne de l'amortisseur et l'autre extrémité obture de manière étanche l'arbre (5) de l'amortisseur, dans lequel existe, dans le joint compensateur à double étanchéité (10), une séparation ou espacement longitudinal(e) axial(e) substantiel(le) (13) entre l'extrémité de joint (10a) du corps cylindrique interne de l'amortisseur et l'extrémité de joint (10b) de l'arbre (5), formant ainsi une zone élastique espacée (11) coaxiale à et sur l'arbre (5) de l'amortisseur, constituant, d'un côté, une chambre annulaire de compensation de fluide (11a) et, de l'autre côté, une chambre à air (11b) et dans lequel un capuchon de fermeture (3) comporte au moins un passage d'air (3a) entre l'intérieur de la chambre à air (11b) et l'extérieur qui permet un passage d'air compensatoire, évitant ainsi des contre-forces et dans lequel existe un séparateur (12) qui maintient l'espacement longitudinal axial (13) entre l'extrémité de joint (10a) du corps interne (10a) et l'extrémité de joint (10b) de l'arbre, et **caractérisé par le fait que** le séparateur (12) présente des filets de positionnement (16) disposés de manière symétrique dans la direction radiale et sur la surface intérieure de la chambre à air (11b).

2. Joint compensateur à double étanchéité selon la revendication 1, **caractérisé par le fait que** le séparateur (12) se présente sous forme d'une extension annulaire (14) du capuchon de fermeture (3), qui s'étend sur ou recouvre l'arbre (5) de l'amortisseur et présente un sommet (15) qui s'adapte dans l'extrémité de joint (10b) de l'arbre.

3. Joint compensateur à double étanchéité selon les revendications précédentes, **caractérisé par le fait que** la surface annulaire externe de la chambre à air (11b) comporte des rainures d'évacuation longitudinales peu profondes (17).
